# EUROPEAN PATENT APPLICATION

(11) **EP 4 518 505 A1**
(43) Date of publication of application: **05.03.2025**
(21) Application number: 22939405.1
(22) Date of filing: 29.04.2022
(51) Int. Cl.: H04W 72/12, H04W 28/20

(54) **SCHEDULING INFORMATION DETERMINATION METHOD AND APPARATUS, AND DOWNLINK CONTROL INFORMATION SENDING METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/090769
(87) International publication number: WO 2023/206561

(57) **Abstract**

The present disclosure relates to a scheduling information determination method and apparatus, and a downlink control information sending method and apparatus, the scheduling information determination method comprising: receiving downlink control information (DCI) sent by a network device and used for scheduling a plurality of cells; determining a first association relationship between the value of a specific information domain in the DCI and a plurality of pieces of scheduling information, and a second association relationship between the plurality of pieces of scheduling information and the plurality of scheduled cells; and according to the first association relationship and the second association relationship, determining scheduling information of each scheduled cell. In the present disclosure, a terminal can determine the first association relationship and the second association relationship; according to the first association relationship, a plurality pieces of scheduling information corresponding to the value of the specific information domain in the DCI can be determined; and according to the second association relationship, a scheduled cell corresponding to each piece of scheduling information can be determined, and further the scheduling information of each scheduled cell is determined. Therefore, on the basis of a network device scheduling a plurality of cells by means of one piece of DCI, the terminal can accurately understand the scheduling information of each cell indicated by the DCI.

## Description

### TECHNICAL FIELD

The present disclosure relates to the field of communication technology, and in particular to a scheduling information determining method, a downlink control information transmitting method, a scheduling information determining apparatus, a downlink control information transmitting apparatus, a communication device, and a computer-readable storage medium.

### BACKGROUND

Based on the existing mechanism, the DCI (Downlink Control Information) of the current cell is only allowed to schedule data for one cell, such as to schedule PUSCH (Physical Uplink Shared Channel) and PDSCH (Physical Downlink Shared Channel).

With the development of communication technology and the gradual fragmentation of frequency resources, these dispersed spectrum resources are utilized through Cross-Carrier Scheduling (CCS) to achieve higher network throughput and better coverage. By scheduling multi-cell data corresponding to the dispersed spectrum resources through a single DCI, the payload overhead of the DCI can be effectively reduced and system capacity can be improved. However, there is currently no suitable solution proposed for the design of a single DCI that enables scheduling for multiple cells.

### SUMMARY

In view of this, the embodiments of the present disclosure propose a scheduling information determining method, a downlink control information transmitting method, a scheduling information determining apparatus, a downlink control information transmitting apparatus, a communication device, and a computer-readable storage medium to solve technical problems in related arts.

According to the first aspect of the embodiments of the present disclosure, a scheduling information determining method is proposed, performed by a terminal, including: receiving downlink control information (DCI) for scheduling a plurality of cells transmitted by a network device; determining a first associating relationship between a value of a specific information field in the DCI and a plurality of pieces of scheduling information, and a second associating relationship between the plurality of pieces of scheduling information and a plurality of scheduled cells; and determining scheduling information for each of the plurality of scheduled cells based on the first associating relationship and the second associating relationship.

According to the second aspect of the embodiments of the present disclosure, a downlink control information transmitting method is proposed, performed by a network device. The method includes: determining a first associating relationship between a value of a specific information field in DCI and a plurality of pieces of scheduling information each with a type same as a type of the specific information field, and a second associating relationship between the plurality of pieces of scheduling information and a plurality of scheduled cells; generating DCI based on the first associating relationship and the second associating relationship; and transmitting generated DCI to a terminal.

According to the third aspect of this disclosed embodiment, a scheduling information determining apparatus is proposed, applied to a terminal, including: a receiving module, configured to receive downlink control information (DCI) for scheduling a plurality of cells transmitted by a network device; and a processing module, configured to determine a first associating relationship between a value of a specific information field in the DCI and a plurality of pieces of scheduling information, and a second associating relationship between the plurality of pieces of scheduling information and a plurality of scheduled cells; and determine scheduling information for each of the plurality of scheduled cells based on the first associating relationship and the second associating relationship.

According to the fourth aspect of the disclosed embodiment, a downlink control information transmitting apparatus is proposed, applied to a network device, including: a processing module, configured to determine a first associating relationship between a value of a specific information field in DCI and a plurality of pieces of scheduling information each with a type same as a type of the specific information field, and a second associating relationship between the plurality of pieces of scheduling information and a plurality of scheduled cells; and generate DCI based on the first associating relationship and the second associating relationship; and a transmitting module, configured to transmit generated DCI to a terminal.

According to the fifth aspect of the embodiments of the present disclosure, a communication device is proposed, including: one or more processors; and one or more memories for storing a computer program; where when the computer program is executed by the one or more processors, the scheduling information determining method described above is implemented.

According to the sixth aspect of the embodiments of the present disclosure, a communication device is proposed, including: one or more processors; and one or more memories for storing a computer program; where when the computer program is executed by the one or more processors, the downlink control information transmitting method described above is implemented.

According to the seventh aspect of the embodiments of the present disclosure, a computer-readable storage medium is proposed for storing a computer program, where when the computer program is executed by one or more processors, the scheduling information determining method described above is implemented.

According to the eighth aspect of the embodiments of the present disclosure, a computer-readable storage medium is proposed for storing a computer program, where when the computer program is executed by one or more processors, the downlink control information transmitting method described above is implemented.

According to embodiments in the present disclosure, the terminal can determine the first associating relationship between the value of a specific information field in DCI and multiple pieces of scheduling information, and the second associating relationship between the multiple pieces of scheduling information and multiple scheduled cells. Then, based on the first associating relationship, multiple pieces of scheduling information corresponding to the value of the specific information field in the DCI can be determined, and based on the second associating relationship, the scheduled cell corresponding to each piece of scheduling information can be determined, and thereby the scheduling information for each scheduled cell can be determined. On the basis of the network device scheduling multiple cells through one DCI, the terminal can accurately interpret the scheduling information for each cell indicated by the DCI.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present disclosure. For those skilled in the art, other drawings can also be obtained according to these drawings without creative effort.
FIG. 1A is a schematic flowchart of a scheduling information determining method according to an embodiment in the present disclosure.
FIG. 1B is a schematic diagram of an application scenario of a scheduling information determining method according to an embodiment in the present disclosure.
FIG. 2 is a schematic flowchart of a downlink control information transmitting method according to an embodiment in the present disclosure.
FIG. 3 is a schematic block diagram of a scheduling information determining apparatus according to an embodiment in the present disclosure.
FIG. 4 is a schematic block diagram of a downlink control information transmitting apparatus according to an embodiment in the present disclosure.
FIG. 5 is a schematic block diagram of a device for transmitting downlink control information according to an embodiment in the present disclosure.
FIG. 6 is a schematic block diagram of a device for determining scheduling information according to an embodiment in the present disclosure.

### DETAILED DESCRIPTION

The technical solutions in the embodiments of the present disclosure are clearly described below with reference to the accompanying drawings in the embodiments of the present disclosure. The embodiments described are merely some embodiments of the present disclosure, and not all embodiments. Other embodiments achieved by those skilled in the art according to the embodiments in the present disclosure without paying creative work shall all fall within the scope of protection of the present disclosure.

The term used in the embodiments of the present disclosure is for the purpose of describing particular examples only and is not intended to limit the embodiments of the present disclosure. As used in embodiments of the present disclosure and the appended claims, the singular forms "a", "an" and "the" are intended to include the plural forms as well, unless the context clearly indicates otherwise. It should further be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. Depending on the context, the word "if" as used herein can be interpreted as "at the time of", "when" or "in response to determining".

For the purpose of simplicity and ease of understanding, the terms used in the present disclosure to represent comparison are "greater than", "less than", "higher than" or "lower than". But for those skilled in the art, it can be understood that the term "greater than" also encompasses the meaning of "greater than or equal to", "less than" also encompasses the meaning of "less than or equal to", "higher than" encompasses the meaning of "higher than or equal to", and "lower than" also encompasses the meaning of "lower than or equal to".

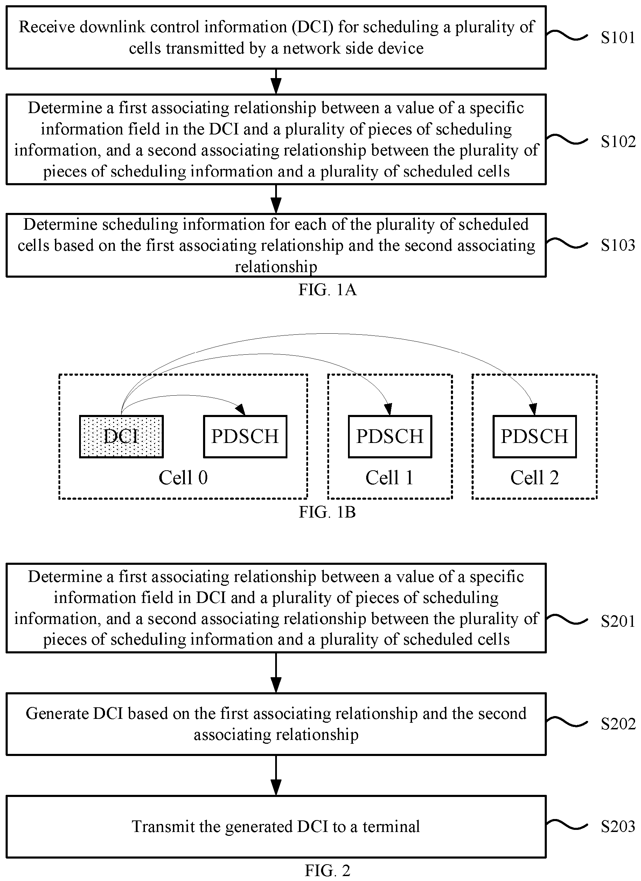

FIG. 1A is a schematic flowchart of a scheduling information determining method according to an embodiment in the present disclosure. The scheduling information determining method shown in the embodiments can be applied to a terminal. The terminal includes but is not limited to a communication device such as a mobile phone, a tablet, a wearable device, a sensor, or an Internet of Things (IoT) device. The terminal can communicate with a network device. The network device includes but not limited to a network device (such as a base station, a core network, etc.) in a communication system such as a 4G communication system, a 5G communication system, or a 6G communication system, etc.

As shown in FIG. 1A, the scheduling information determining method may include the following steps S101 to S103.

In step S101, downlink control information (DCI) for scheduling a plurality of cells transmitted by a network side device is received.

In step S102, a first associating relationship between a value of a specific information field in the DCI and a plurality of pieces of scheduling information, and a second associating relationship between the plurality of pieces of scheduling information and a plurality of scheduled cells are determined.

In step 103, scheduling information for each of the plurality of scheduled cells is determined based on the first associating relationship and the second associating relationship.

In an embodiment, DCI may include various types of information fields, such as FDRA (Frequency Domain Resource Assignment) field, ZP CSI-RS trigger (Zero Power Channel Information Reference Signal trigger) field, and BandWidth Part Indicator field, etc.

For DCI in an existing mechanism, one type of information field can schedule one cell, for example, the FDRA information field can schedule a frequency domain resource of a target cell.

This embodiment can be applied in scenarios where one DCI schedules multiple cells. In this embodiment, the network device can transmit DCI to the terminal for scheduling multiple cells (i.e., scheduled cells). Specifically, an associating relationship (that is, a value of one information filed associates multiple pieces of scheduling information) between a value of a specific information field (a value of one information filed, instead of a value of multiple information fields) in the DCI and multiple pieces of scheduling information can be established, which can be referred to as a first associating relationship, and an associating relationship between multiple pieces of scheduling information and multiple scheduled cells can be established, which can be referred to as a second associating relationship. Types of multiple pieces of scheduling information corresponding to the value of one type of information field are the same, for example, the value of one type of information field corresponds to the frequency domain resource FDRA for different cells, or the value of one type of information field corresponds to the BWP index configured for different cells. Please refer to the following description for details.

This indication method can be referred to as combined or shared indication. For example, a specific value indicated by a specific type of information field in one DCI can be associated with multiple pieces of scheduling information, and the multiple pieces of scheduling information can be associated with multiple scheduled cells.

The first associating relationship can be determined through a predefined manner or through signaling indication. Taking signaling indication as an example, the network side can define the first associating relationship between a specific value indicated by a specific type of information field in DCI and multiple pieces of scheduling information based on signaling indication, such as indication through radio resource control (RRC) signaling. The signaling can be the signaling configured for the cell where the DCI is received. Taking RRC signaling as an example, the terminal receives the corresponding RRC signaling in the cell where the DCI is received, where the RRC signaling indicates the associating relationship between the specific value indicated by a specific type of information field in DCI and multiple pieces of scheduling information. The number of bits occupied by a specific type of information field is related to the range of an indication value configured by RRC signaling.

FIG. 1B is a schematic diagram of an application scenario of a scheduling information determining method according to an embodiment in the present disclosure. As shown in FIG. 1B, taking the BWP indicator field as an example, in a DCI for scheduling three cells (with cell IDs of 0, 1, and 2), the corresponding DCI is received in cell 0.

For example, the first associating relationship is determined through signaling indication, and the terminal receives corresponding RRC signaling in cell 0 to determine the first associating relationship between the value of the BWP indicator field in the DCI used for scheduling multiple cells and the BWP IDs configured for multiple cells. For example, for the BWP indicator field, the first associating relationship can be shown in Table 1 as follows:

**Table 1**

| BWP indicator | First scheduling information (BWP id) | Second scheduling information (BWP id) | Third scheduling information (BWP id) |
|---|---|---|---|
| 00 | 1 | 2 | 3 |
| 01 | 2 | 3 | 1 |
| 10 | 3 | 2 | 4 |
| 11 | 4 | 1 | 2 |

As shown in Table 1, the number of bits occupied by the BWP indicator field is log₂(4)=2. In the scenario where the value of the BWP indicator field is 01, according to the first associating relationship, it can be determined that the value 01 of the BWP indicator field is associated with three pieces of scheduling information, where the first piece of scheduling information is BWP ID=2, the second piece of scheduling information is BWP ID=3, and the third piece of scheduling information is BWP ID=1. Furthermore, based on the second associating relationship, it can be determined that the first piece of scheduling information is associated with cell 0, the second piece of scheduling information is associated with cell 1, and the third piece of scheduling information is associated with cell 2. Therefore, it can be determined that the BWP ID of cell 0 is 2, the BWP ID of cell 1 is 3, and the BWP ID of cell 2 is 1.

For the specific type of the information field in the DCI that schedules multiple cells, the value of the information field can be associated with n pieces of scheduling information *I*_{*k*₁}*, I*_{*k*₂}, ..., and *I_{kₙ},* where n equals to the number of scheduled cells, and the scheduling information *I*_{*k*₁} is the scheduling information of the cell *k*₁*, I_{kⱼ}* is the scheduling information of the cell *kⱼ,* ..., and *I_{kₙ}* is the scheduling information of the cell *kₙ*, where *kⱼ* is the cell ID.

The terminal can determine the first associating relationship between the value of a specific information field in DCI and multiple pieces of scheduling information, and the second associating relationship between the multiple pieces of scheduling information and multiple scheduled cells. Then, based on the first associating relationship, multiple pieces of scheduling information corresponding to the value of the specific information field in the DCI can be determined, and based on the second associating relationship, the scheduled cell corresponding to each piece of scheduling information can be determined, and thereby the scheduling information for each scheduled cell can be determined. On the basis of the network device scheduling multiple cells through one DCI, the terminal can accurately interpret the scheduling information for each cell indicated by the DCI. The above mainly introduces the specific implementation of the first associating relationship, and the corresponding determination of the second associating relationship will be discussed in the following text.

It should be noted that regarding the multiple cells scheduled by DCI, that is, multiple scheduled cells, the terminal can determine them based on the CIF (Cell Indicator Field) in DCI, or they can be pre-agreed with the network device, or they can be determined based on the predefined rule (such as a protocol agreement), which is not limited in the present disclosure.

In an embodiment, determining the first associating relationship between the value of the specific information field in the DCI and multiple pieces of scheduling information includes determining the first associating relationship based on an indication from a network device. For example, the network device can determine the associating relationship between the value of an information field (one information field, not multiple information fields) in DCI and multiple pieces of scheduling information, and then indicate the associating relationship to the terminal through RRC (Radio Resource Control) signaling. Of course, the associating relationship can also be determined according to a predefined rule, such as based on a protocol agreement.

In an embodiment, determining the second associating relationship between the multiple pieces of scheduling information and the multiple scheduled cells includes determining the second associating relationship according to the predefined rule.

The first associating relationship between the value of the specific information field in DCI and multiple pieces of scheduling information, and the second associating relationship between multiple pieces of scheduling information and multiple scheduled cells can be defined by the predefined rule, such as a protocol agreement, or can also be indicated by the network device, where the approach through which the network device indicate the associating relationship includes but is not limited to indicating through RRC signaling, indicating through DCI, or indicating through MAC CE (Media Access Control Control Element). The number of bits occupied by the information field in the DCI is determined by the number of values that is determined based on a signaling instruction or a predetermined method. For example, if the first associating relationship defines the values of N information fields, and each value of the information field is associated with multiple pieces of scheduling information, then the number of bits occupied by the information field in the DCI is equal to log₂(N).

The following embodiments mainly provide illustrative explanations for the situation where the predefined rule stipulates the second associating relationship.

In an embodiment, the multiple pieces of scheduling information include n pieces of scheduling information, and the multiple scheduled cells include n scheduled cells. The predefined rule stipulates that a j-th piece of scheduling information in the n pieces of scheduling information is associated with a j-th scheduled cell in the n scheduled cells, where 1 ≤ j ≤ n.

The scheduled cells can include the cell where the terminal receives the DCI and other cells (except the cell where the terminal receives the DCI in the scheduled cells), or the scheduled cells can not include the cell where the terminal receives the DCI and only include other cells. In this embodiment, the predefined rule can stipulate the associating relationship between the scheduled cell and the scheduling information without distinguishing between the cell where the terminal receives the DCI and other cells. The associating relationship between the cell where the terminal receives the DCI, as well as other cells and pieces of scheduling information can be stipulated according to the same rule.

Taking n scheduled cells as an example, n pieces of scheduling information can be determined based on the first associating relationship and the value of the information field in DCI, and the corresponding relationship between n pieces of scheduling information and n scheduled cells can be determined based on the second associating relationship. The second associating relationship can be that the j-th piece of scheduling information in n pieces of scheduling information is associated with the j-th scheduled cell in n scheduled cells.

Based on this, the terminal can determine that the j-th piece of scheduling information is the scheduling information for the j-th scheduled cell, such that on the basis of the network device scheduling multiple cells through one DCI, the terminal can accurately interpret the scheduling information for each cell indicated by the DCI.

For example, for the n scheduled cells from the first scheduled cell to the n-th scheduled cell, taking the combine indication method in the FDRA field as an example, n pieces of scheduling information (such as *I*_{*k*₁} to *I_{kₙ}*) can be determined based on the value of the FDRA field and the first associating relationship, where *kⱼ* is the cell ID. In this embodiment, based on the second associating relationship, the terminal can determine the first piece of scheduling information as the frequency domain scheduling information for the first scheduled cell (cell *k*₁), the second piece of scheduling information as the frequency domain scheduling information for the second scheduled cell (cell *k*₂), ..., the j-th piece of scheduling information as the frequency domain scheduling information for the j-th scheduled cell (cell *kⱼ*)*,* ..., and the n-th piece of scheduling information as the frequency domain scheduling information for the n-th scheduled cell (cell *kₙ*), such that on the basis of multiple cells being scheduled through one DCI, the terminal can accurately interpret the frequency domain scheduling information for each cell indicated by the DCI.

For example, for the n scheduled cells from the first scheduled cell to the n-th scheduled cell, taking the combine indication method in the ZP CSI-RS trigger field as an example, n pieces of scheduling information (such as *I*_{*k*₁} to *I_{kₙ}*) can be determined based on the value of the ZP CSI-RS trigger field and the first associating relationship, where *kⱼ* is the cell ID. In this embodiment, based on the second associating relationship, the terminal can determine the first piece of scheduling information as the ZP CSI-RS trigger information for the first scheduled cell (cell *k*₁), the second piece of scheduling information as the ZP CSI-RS trigger information for the second scheduled cell (cell *k*₂), ..., the j-th piece of scheduling information as the ZP CSI-RS trigger information for the j-th scheduled cell (cell *kⱼ*), ..., and the n-th piece of scheduling information as the ZP CSI-RS trigger information for the n-th scheduled cell (cell *kₙ*), such that on the basis of multiple cells being scheduled through one DCI, the terminal can accurately interpret the ZP CSI-RS trigger information for each cell indicated by the DCI.

For example, for the n scheduled cells from the first scheduled cell to the n-th scheduled cell, taking the combine indication method in the BWP indicator field as an example, n pieces of scheduling information (such as *I*_{*k*₁} to *I_{kₙ}*) can be determined based on the value of the BWP indicator field and the first associating relationship, where *kⱼ* is the cell ID. In this embodiment, based on the second associating relationship, the terminal can determine the first piece of scheduling information as the BWP information for the first scheduled cell (cell *k*₁), the second piece of scheduling information as the BWP information for the second scheduled cell (cell *k*₂), ..., the j-th piece of scheduling information as the BWP information for the j-th scheduled cell (cell *kⱼ*), *...,* and the n-th piece of scheduling information as the BWP information for the n-th scheduled cell (cell *kₙ*), such that on the basis of multiple cells being scheduled through one DCI, the terminal can accurately interpret the BWP information for each cell indicated by the DCI.

Where how to determine the order of multiple scheduled cells will be explained in the subsequent embodiments.

The following embodiments illustrate how the order of multiple scheduled cells is determined, where the predefined rule stipulates the associating relationship between the information field and the cell where the terminal receives the DCI and other cells according to the same rule.

In an embodiment, the predefined rule stipulates that the identity of the j-th scheduled cell is less than the identity of the (j+1)-th scheduled cell, such as *kⱼ* less than *k*_{*j+*1}; alternatively, the predefined rule stipulates that the identity of the j-th scheduled cell is greater than the identity of the (j+1)-th scheduled cell, such as *kⱼ* greater than *k*_{*j*+1}*.*

In an embodiment, regarding the identity (such as Cell ID) of the scheduled cell, the terminal can determine the identity of the scheduled cell based on the RRC signaling transmitted by the network device, e.g., based on information elements (IE) such as ServcellIndex and/or SCellIndex in the RRC signaling. If the identity of the cell corresponds to PCI (Physical Cell Identity), the identity of the scheduled cell can be determined based on the information element PhysCellId in RRC signaling. Of course, the identity of the scheduled cell can also be determined based on other signaling. Alternatively, the identity of the scheduled cell can be determined in other ways, such as by a predefined rule.

The predefined rule can stipulate that the scheduled cells are ordered according to identities of the scheduled cells, for example, the scheduled cells can be ordered from small to large according to their identities. If the identity of the j-th scheduled cell is less than the identity of the (j+1)-th scheduled cell. Alternatively, the scheduled cells can be ordered from large to small according to their identities, and then the identity of the j-th scheduled cell is greater than the identity of the (j+1)-th scheduled cell.

For example, taking four scheduled cells as an example, namely cell #1 with identity 1, cell #2 with identity 2, cell #3 with identity 3, and cell #4 with identity 4. If ordered from small to large according to the identities, *kⱼ* is less than *k*_{*j+*1}*,* and therefore it can be determined that the first cell is cell #1, the second scheduled cell is cell #2, the third cell is cell #3, and the fourth cell is cell #4. If ordered in from large to small according to the identities, *kⱼ* is greater than *k*_{*j+*1}*,* and therefore it can be determined that the first cell is cell #4, the second scheduled cell is cell #3, the third cell is cell #2, and the fourth cell is cell #1.

Based on this, the ordering of the cells can be accurately determined according to their identities, and it can be determined that the j-th scheduling information is for the j-th scheduled cell.

In an embodiment, the predefined rule stipulates that the center frequency of the j-th scheduled cell is less than the center frequency of the (j+1)-th scheduled cell; alternatively, the predefined rule stipulates that the center frequency of the j-th scheduled cell is greater than the center frequency of the (j+1)-th scheduled cell.

The center frequency of the scheduled cell can be determined by the terminal based on the information transmitted by the network device, such as based on the Synchronization Signal Block (SSB) transmitted by the network device. Of course, the center frequency of the scheduled cell can also be determined in other ways, such as by a predefined rule.

The predefined rule can stipulate that the scheduled cells are ordered according to their center frequencies. For example, the scheduled cells can be ordered from small to large according to their center frequencies, such that the center frequency of the j-th scheduled cell is less than the center frequency of the (j+1)-th scheduled cell. Alternatively, the scheduled cells can be ordered from large to small according to their center frequencies, such that the center frequency of the j-th scheduled cell is greater than the center frequency of the (j+1)-th scheduled cell.

For example, taking four scheduled cells as an example, the center frequency of cell #1 is f1, the center frequency of cell #2 is f2, the center frequency of cell #3 is f3, and the center frequency of cell #4 is f4, where f1 > f2 > f3 >f4. If the scheduled cells are ordered from small to large according to their center frequencies, the first scheduled cell is cell #4, the second scheduled cell is cell #3, the third scheduled cell is cell #2, and the fourth scheduled cell is cell #1. If the scheduled cells are ordered from large to small according to their center frequencies, the first scheduled cell is cell #1, the second scheduled cell is cell #2, the third scheduled cell is cell #3, and the fourth scheduled cell is cell #4.

Based on this, the ordering of the cells can be accurately determined according to the center frequencies of the cells, and it can be determined that the j-th scheduling information is for the j-th scheduled cell.

In an embodiment, the predefined rule stipulates that the absolute radio frequency channel number (ARFCN) corresponding to the center frequency of the j-th scheduled cell is less than the ARFCN corresponding to the center frequency of the (j+1)-th scheduled cell; alternatively, the predefined rule stipulates that the ARFCN corresponding to the center frequency of the j-th scheduled cell is greater than the ARFCN corresponding to the center frequency of the (j+1)-th scheduled cell.

Regarding the ARFCN of the scheduled cell, the terminal can determine the ARFCN of the scheduled cell based on the center frequency of the scheduled cell or in other ways.

The predefined rule can stipulate that the scheduled cells are ordered according to their ARFCNs, for example, the scheduled cells can be ordered from small to large according to ARFCN, such that the ARFCN of the j-th scheduled cell is less than the ARFCN of the (j+1)-th scheduled cell, or the scheduled cells can be ordered from large to small according to ARFCN, such that the ARFCN of the j-th scheduled cell is greater than the ARFCN of the (j+1)-th scheduled cell.

For example, taking four scheduled cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4. If the scheduled cells are ordered from small to large according to ARFCNs, the first cell is cell #4, the second scheduled cell is cell #3, the third cell is cell #2, and the fourth cell is cell #1. If the scheduled cells are ordered from small to large according to ARFCNs, the first cell is cell #1, the second scheduled cell is cell #2, the third cell is cell #3, and the fourth cell is cell #4.

Based on this, the ordering of the cells can be accurately determined according to the ARFCNs of the cells, and it can be determined that the j-th scheduling information is for the j-th scheduled cell.

In an embodiment, the multiple pieces of scheduling information include n pieces of scheduling information, and the multiple scheduled cells include the cell where the terminal receives the DCI and (n-1) other cells. The predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, where 2 ≤ i ≤ n.

The scheduled cells can include the cell where the terminal receives the DCI and other cells (except the cell where the terminal receives the DCI in the scheduled cells), or the scheduled cells can not include the cell where the terminal receives the DCI and only include other cells. In this embodiment, when the predefined rule stipulates the associating relationship between the scheduled cell and the scheduling information, it can be distinguished between the cell where the terminal receives the DCI and other cells. The associating relationship between a piece of scheduling information and the cell where the terminal receives the DCI, and the associating relationship between pieces of scheduling information and other cells can be stipulated according to different rules.

Taking n scheduled cells as an example, if the n scheduled cells include the cell where the terminal receives the DCI and n-1 other cells, The n pieces of scheduling information can be determined according to the first associating relationship and the value of the scheduling information in the DCI, and the corresponding relationship between the n pieces of scheduling information and the n scheduled cells can be determined according to the second associating relationship. The second associating relationship can be that the first piece of scheduling information in the n pieces of scheduling information is associated with the cell where the terminal receives the DCI, and the i-th piece of scheduling information in the second to the n pieces of scheduling information is associated with the (i-1)-th other cell in the n-1 other cells. That is, for the n-1 other cells, the associating relationship between cells and pieces of scheduling information is defined according to the same rule, and the cell where the terminal receives the DCI is defined to be associated with the first piece of scheduling information.

Based on this, the terminal can determine that the first piece of scheduling information is the scheduling information for the cell where the terminal receives the DCI. From the second piece of scheduling information to the n-th piece of scheduling information, the i-th piece of scheduling information is the scheduling information for the (i-1)-th other cell. Therefore, based on the network device scheduling multiple cells through one DCI, the terminal can accurately interpret the scheduling information for each cell indicated by the DCI.

For example, for the n scheduled cells from the first cell to the n-th scheduled cell, if the n scheduled cells include the cell where the terminal receives the DCI and n-1 other cells, taking the combine indication method in the FDRA field as an example, n pieces of scheduling information can be determined based on the value of the FDRA field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n*-1}, then the cell ID of the (i-1)-th scheduled cell can be *k*_{*i*-1}.

In this embodiment, the terminal can determine the first piece of scheduling information as the frequency domain scheduling information for the cell where the terminal receives the DCI based on the second associating relationship. In the (n-1) pieces of scheduling information from the second piece of scheduling information to the n-th piece of scheduling information, the second piece of scheduling information is the frequency domain scheduling information for the first other cell, ..., the i-th piece of scheduling information is the frequency domain scheduling information for the (i-1)-th other cell, ..., and the n-th piece of scheduling information is the frequency domain scheduling information for the (n-1)-th other cell. Therefore, based on multiple cells being scheduled through one DCI, the terminal can accurately interpret the frequency domain scheduling information for each cell indicated by the DCI.

For example, for the n scheduled cells from the first scheduled cell to the n-th scheduled cell, taking the combine indication method in the ZP CSI-RS trigger field as an example, n pieces of scheduling information can be determined based on the value of the ZP CSI-RS trigger field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n*-1}, then the cell ID of the i-th scheduled cell can be *k*_{*i*-1}.

In this embodiment, the terminal can determine the first piece of scheduling information as the ZP CSI-RS trigger information for the cell where the terminal receives the DCI based on the second associating relationship. In the (n-1) pieces of scheduling information from the second piece of scheduling information to the n-th piece of scheduling information, the second piece of scheduling information is the ZP CSI-RS trigger information for the first other cell (cell *k*₁), ..., the i-th piece of scheduling information is the ZP CSI-RS trigger information for the (i-1)-th other cell (cell *k*_{*i-*1}), ..., and the n-th piece of scheduling information is the ZP CSI-RS trigger information for the (n-1)-th other cell (cell *k*_{*n-*1})*.* Therefore, based on multiple cells being scheduled through one DCI, the terminal can accurately interpret the ZP CSI-RS trigger information for each cell indicated by the DCI.

For example, for the n scheduled cells from the first cell to the n-th scheduled cell, if the n scheduled cells include the cell where the terminal receives the DCI and n-1 other cells, taking the combine indication method in the BWP indicator field as an example, n pieces of scheduling information can be determined based on the value of the BWP indicator field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n-*1}, then the cell ID of the i-th scheduled cell can be *k*_{*i*-1}.

In this embodiment, the terminal can determine the first piece of scheduling information as the BWP information for the first cell based on the second associating relationship. In the (n-1) pieces of scheduling information from the second piece of scheduling information to the n-th piece of scheduling information, the second piece of scheduling information is the BWP information information for the first other cell (cell *k*₁)*,* ..., the i-th piece of scheduling information is the BWP information information for the (i-1)-th other cell (cell *k*_{*i*-1})*,* ..., and the n-th piece of scheduling information is the BWP information information for the (n-1)-th other cell (cell *k*_{*n-*1})*.* Therefore, based on multiple cells being scheduled through one DCI, the terminal can accurately interpret the BWP information information for each cell indicated by the DCI.

How to determine the order of multiple scheduled cells will be explained in the subsequent embodiments.

The following embodiments illustrate how the order of multiple scheduled cells is determined, where the predefined rule stipulates the associating relationship between the information field and the cell where the terminal receives the DCI and other cells according to different rules.

In an embodiment, the predefined rule stipulates that the identity of the (i-1)-th scheduled cell is less than the identity of the i-th scheduled cell; alternatively, the predefined rule stipulates that the identity of the (i-1)-th scheduled cell is greater than the identity of the i-th scheduled cell.

Regarding the identity (such as Cell ID) of the scheduled cell, the terminal can determine the identity of the scheduled cell based on the RRC signaling transmitted by the network device, e.g., based on IEs such as ServcellIndex and/or SCellIndex in the RRC signaling. If the identity of the cell corresponds to PCI, the identity of the scheduled cell can be determined based on the information element PhysCellId in RRC signaling. Of course, the identity of the scheduled cell can also be determined based on other method, such as by predefined rules.

The predefined rule can stipulate that the scheduled cells are ordered according to their identities, for example, the scheduled cells can be ordered from small to large according to their identities. Then, the cell where the terminal receives the DCI is the first cell, and the identity of the (i-1)-th other cell is smaller than the identity of the i-th other cell. If the cell ID of the cell where the terminal receives the DCI is not between *k*₁ and *k*_{*n-*1}*, k*_{*i-*1} is less than *kᵢ*. Alternatively, if the scheduled cells are ordered from large to small according to their identities, the cell where the terminal receives the DCI is the first cell, and the identity of the (i-1)-th other cell is greater than the identity of the i-th other cell. If the cell ID of the cell where the terminal receives the DCI is not between *k*₁ and *k*_{*n-*1}*, k*_{*i-*1} is greater than *kᵢ*.

For example, taking four scheduled cells as examples, namely cell #1 with identity 1, cell #2 with identity 2, cell #3 with identity 3, and cell #4 with identity 4, where cell #3 is the cell where the terminal receives the DCI, If the scheduled cells are ordered from small to large according to the identities, the first scheduled cell is cell #3, and for other cells except cell #3, *k*_{*i-*1} is less than *kᵢ*, the second scheduled cell is cell #1, the third scheduled cell is cell #2, and the fourth scheduled cell is cell #4. If the scheduled cells are ordered from large to small according to the identities, the first scheduled cell is cell #3, and for other cells except cell #3, *k*_{*i-*1} is greater than *kᵢ*, the second scheduled cell is cell #4, the third scheduled cell is cell #2, and the fourth scheduled cell is cell #1.

Based on this, the ordering of the cells can be accurately determined according to their identities, and the first piece of scheduling information can be determined as the scheduling information for the cell where the terminal receives the DCI, and the i-th piece of scheduling information is specifically the scheduling information for the i-th other cell.

In an embodiment, the predefined rule stipulates that the center frequency of the (i-1)-th scheduled cell is less than the center frequency of the i-th scheduled cell; alternatively, the predefined rule stipulates that the center frequency of the (i-1)-th scheduled cell is less than the center frequency of the i-th scheduled cell.

The center frequency of the scheduled cell can be determined by the terminal based on the information transmitted by the network device, such as based on the SSB transmitted by the network device. Of course, the center frequency of the scheduled cell can also be determined in other ways, such as by a predefined rule.

The predefined rule can stipulate that the scheduled cells are ordered according to their center frequencies. For example, the scheduled cells can be ordered from small to large according to their center frequencies. Therefore, the cell where the terminal receives the DCI is the first cell, and the center frequency of the (i-1)-th other cell is lower than the center frequency of the i-th other cell. Alternatively, if the scheduled cells are ordered from large to small according to their center frequencies, the cell where the terminal is located is the first cell, and the center frequency of the (i-1)-th other cell is greater than the center frequency of the i-th other cell.

For example, taking four scheduled cells as an example, the center frequency of cell #1 is f1, the center frequency of cell #2 is f2, the center frequency of cell #3 is f3, and the center frequency of cell #4 is f4, where f1 > f2 > f3 > f4, and cell #3 is the cell where the terminal receives the DCI. If the scheduled cells are ordered from small to large according to their center frequencies, the first scheduled cell is cell #3, the second scheduled cell is cell #4, the third scheduled cell is cell #2, and the fourth scheduled cell is cell #1. If the scheduled cells are ordered from large to small according to their center frequencies, the first scheduled cell is cell #3, the second scheduled cell is cell #1, the third scheduled cell is cell #2, and the fourth scheduled cell is cell #4.

Based on this, the ordering of the cells can be accurately determined according to their center frequencies, and the first piece of scheduling information can be determined as the scheduling information for the cell where the terminal receives the DCI, and the i-th piece of scheduling information is specifically the scheduling information for the i-th other cell.

In an embodiment, the predefined rule stipulates that the absolute radio frequency channel number ARFCN corresponding to the center frequency of the (i-1)-th scheduled cell is less than the ARFCN corresponding to the center frequency of the i-th scheduled cell; and alternatively, the predefined rule stipulates that the ARFCN corresponding to the center frequency of the (i-1)-th scheduled cell is greater than the ARFCN corresponding to the center frequency of the i-th scheduled cell.

Regarding the ARFCN of the scheduled cell, the terminal can determine the ARFCN of the scheduled cell based on the center frequency of the scheduled cell or in other ways.

The predefined rule can stipulate that the scheduled cells are ordered according to their ARFCNs. For example, the scheduled cells can be ordered from small to large according to their ARFCNs. Therefore, the cell where the terminal receives the DCI is the first cell, and the ARFCN of the (i-1)-th other cell is lower than the ARFCN of the i-th other cell. Alternatively, if the scheduled cells are ordered from large to small according to their ARFCNs, the cell where the terminal is located is the first cell, and the ARFCN of the (i-1)-th other cell is greater than the ARFCN of the i-th other cell.

For example, taking four scheduled cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4, and cell #3 is the cell where the terminal receives the DCI. If the scheduled cells are ordered from small to large according to their ARFCNs, the first scheduled cell is cell #3, the second scheduled cell is cell #4, the third scheduled cell is cell #2, and the fourth scheduled cell is cell #1. If the scheduled cells are ordered from large to small according to their ARFCNs, the first scheduled cell is cell #3, the second scheduled cell is cell #1, the third scheduled cell is cell #2, and the fourth scheduled cell is cell #4.

Based on this, the ordering of the cells can be accurately determined according to their ARFCNs, and the first piece of scheduling information can be determined as the scheduling information for the cell where the terminal receives the DCI, and the i-th piece of scheduling information is specifically the scheduling information for the i-th other cell.

FIG. 2 is a schematic flowchart of a downlink control information transmitting method according to an embodiment in the present disclosure. The downlink control information transmitting method shown in the embodiments can be performed by a network device, where the network device can communicate with a terminal. The network device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 2, the downlink control information transmitting method may include the following steps S201 to S203.

In step S201, a first associating relationship between a value of a specific information field in DCI and a plurality of pieces of scheduling information each with a type same as a type of the specific information field, and a second associating relationship between the plurality of pieces of scheduling information and a plurality of scheduled cells are determined.

In step S202, DCI is generated based on the first associating relationship and the second associating relationship.

In step S203, the generated DCI is transmitted to a terminal.

In an embodiment, the DCI may include various types of information fields, such as FDRA field, ZP CSI-RS trigger field, and bandwidth part indicator field, etc.

For DCI in an existing mechanism, one type of information field can schedule one cell, for example, the FDRA information field can schedule a frequency domain resource of a target cell.

This embodiment can be applied in scenarios where one DCI schedules multiple cells. In this embodiment, the network device can transmit DCI to the terminal for scheduling multiple cells (i.e., scheduled cells). Specifically, an associating relationship between a value of a specific information field in the DCI and multiple pieces of scheduling information can be established, which can be referred to as a first associating relationship, and an associating relationship between multiple pieces of scheduling information and multiple scheduled cells can be established, which can be referred to as a second associating relationship. Types of multiple pieces of scheduling information corresponding to the value of one type of information field (such as the FDRA field corresponding to different cells, or the BWP indicator field corresponding to different cell configurations) are the same, as described below.

This indication method can be referred to as combined or shared indication. For example, a specific value indicated by a specific type of information field in one DCI can be associated with multiple pieces of scheduling information, and the multiple pieces of scheduling information can be associated with multiple scheduled cells.

The first associating relationship can be determined through a predefined manner or through signaling indication. Taking signaling indication as an example, the network side can define the first associating relationship between a specific value indicated by a specific type of information field in DCI and multiple pieces of scheduling information based on signaling indication, such as indication through radio resource control (RRC) signaling. The signaling can be the signaling configured for the cell where the DCI is received. Taking RRC signaling as an example, the terminal receives the corresponding RRC signaling in the cell where the DCI is received, where the RRC signaling indicates the associating relationship between the specific value indicated by a specific type of information field in DCI and multiple pieces of scheduling information. The number of bits occupied by a specific type of information field is related to the range of an indication value configured by RRC signaling.

As shown in FIG. 1B, taking the BWP indicator field as an example, in a DCI for scheduling three cells (with cell IDs of 0, 1, and 2), the corresponding DCI is received in cell 0.

For example, the first associating relationship is determined through signaling indication, and the terminal receives corresponding RRC signaling in cell 0 to determine the first associating relationship between the value of the BWP indicator field in the DCI used for scheduling multiple cells and the BWP IDs configured for multiple cells. For example, for the BWP indicator field, the first associating relationship can be as shown in Table 1 above.

As shown in Table 1, the number of bits occupied by the BWP indicator field is log2(4)=2. In the scenario where the value of the BWP indicator field is 01, according to the first associating relationship, it can be determined that the value of the BWP indicator field is 01. For example, the value 01 of the BWP indicator field can be associated with three scheduling information. The first piece of scheduling information is BWP ID=2, the second piece of scheduling information is BWP ID=3, and the third piece of scheduling information is BWP ID=1. The first piece of scheduling information is associated with cell 0, the second piece of scheduling information is associated with cell 1, and the third piece of scheduling information is associated with cell 2. Therefore, it can be determined that BWP ID=2 for cell 0, BWP ID=3 for cell 1, and BWP ID=1 for cell 2.

For the specific type of the information field in the DCI that schedules multiple cells, the value of the information field can be associated with n pieces of scheduling information *I*_{*k*₁}*, I*_{*k*₂}*,* ..., and *I_{kₙ},* where n equals to the number of scheduled cells, and the scheduling information *I*_{*k*₁} is the scheduling information of the cell *k*₁*, I_{kⱼ}* is the scheduling information of the cell *kⱼ,* ..., and *I_{kₙ}* is the scheduling information of the cell *kₙ*, where *kⱼ* is the cell ID.

The network device can determine the first associating relationship between the value of a specific information field in DCI and multiple pieces of scheduling information, and the second associating relationship between multiple pieces of scheduling information and multiple scheduled cells, and then generate DCI based on the first and second associating relationships, and transmit the generated DCI to the terminal. After receiving the DCI transmitted by the network device, the terminal can determine multiple pieces of scheduling information corresponding to the specific information field in the DCI based on the first associating relationship, and determine the scheduled cell corresponding to each scheduling information based on the second associating relationship, thereby determining the scheduling information for each scheduled cell. On the basis of the multiple cells being scheduled through one DCI, the enable the terminal can accurately interpret the scheduling information for each cell indicated by the DCI. The above mainly introduces the specific implementation of the first associating relationship, and the corresponding determination of the second associating relationship will be discussed in the following text.

It should be noted that regarding the multiple cells scheduled by the DCI, that is, the network device can indicate to the terminal and determine the multiple scheduled cells based on the CIF in DCI. The multiple scheduled cells can also be pre-agreed with the terminal, or the multiple scheduled cells can be determined based on a predefined rule (such as a protocol agreement), which is not limited in the present disclosure.

In an embodiment, determining the first associating relationship between the value of a specific information field in the DCI and multiple pieces of scheduling information each with a type same as a type of the specific information field includes: determining the first associating relationship and/or the second associating relationship based on the implementation of the network device; and the method further includes: indicating the first associating relationship to the terminal. For example, the network device can determine the associating relationship between the value of a specific information field in DCI and multiple pieces of scheduling information, and then indicate the associating relationship to the terminal through RRC signaling. Of course, the associating relationship can also be determined according to a predefined rule, such as based on a protocol agreement.

In an embodiment, determining the second associating relationship between the multiple pieces of scheduling information and the multiple scheduled cells includes determining the second associating relationship according to the predefined rule.

The first associating relationship between the value of the specific information field in DCI and multiple pieces of scheduling information, and the second associating relationship between multiple pieces of scheduling information and multiple scheduled cells can be defined by the predefined rule, such as a protocol agreement, or can also be indicated by the network device, where the approach through which the network device indicate the associating relationship includes but is not limited to indicating through RRC signaling, indicating through DCI, or indicating through MAC CE. The number of bits occupied by the information field in the DCI is determined by the number of values that is determined based on a signaling instruction or a predetermined method. For example, if the first associating relationship defines the values of N information fields, and each value of the information field is associated with multiple pieces of scheduling information, then the number of bits occupied by the information field in the DCI is equal to log₂(N).

The following embodiments mainly provide illustrative explanations for the situation where the predefined rule stipulates the second associating relationship.

In an embodiment, the multiple pieces of scheduling information include n pieces of scheduling information, and the multiple scheduled cells include n scheduled cells. The predefined rule stipulates that a j-th piece of scheduling information in the n pieces of scheduling information is associated with a j-th scheduled cell in the n scheduled cells, where 1 ≤j ≤ n.

The scheduled cells can include the cell where the terminal receives the DCI and other cells (except the cell where the terminal receives the DCI in the scheduled cells), or the scheduled cells can not include the cell where the terminal receives the DCI and only include other cells. In this embodiment, the predefined rule can stipulate the associating relationship between the scheduled cell and the scheduling information without distinguishing between the cell where the terminal receives the DCI and other cells. The associating relationship between the scheduling information and the cell where the terminal receives the DCI and other cells can be stipulated according to the same rule.

Taking n scheduled cells as an example, the network device can determine the first associating relationship between the value of the information field in DCI and n pieces of scheduling information, and indicate the first associating relationship to the terminal. The corresponding relationship between n pieces of scheduling information and n scheduled cells can also be determined based on the second associating relationship. The second associating relationship can be the j-th piece of scheduling information in the n pieces of scheduling information corresponding to the j-th scheduled cell in the n scheduled cells. Then, based on the first associating relationship and the second associating relationship, DCI can be generated to achieve scheduling of multiple cells through one DCI.

Based on this, the network device can indicate n pieces of scheduling information associated with n scheduled cells through the value of the information field in DCI. The terminal can determine that the j-th piece of scheduling information is the scheduling information for the j-th scheduled cell, such that on the basis of the network device scheduling multiple cells through one DCI, the terminal can accurately interpret the scheduling information for each cell indicated by the DCI.

For example, for the first to n-th scheduled cells, taking the combine indication method in the FDRA field as an example, the network device can determine the first associating relationship between the value of the FDRA field and n pieces of scheduling information (such as *I*_{*k*₁} to *I_{kₙ},* where *kⱼ* is the cell ID). In this embodiment, the network device can determine the first piece of scheduling information as the frequency domain scheduling information for the first scheduled cell (cell *k*₁), the second piece of scheduling information as the frequency domain scheduling information for the second scheduled cell (cell *k*₂), ..., the j-th piece of scheduling information as the frequency domain scheduling information for the j-th scheduled cell (cell *kⱼ*), ..., and the n-th piece of scheduling information as the frequency domain scheduling information for the n-th scheduled cell (cell *kₙ*) based on the second associating relationship. Then, DCI can be generated based on the first associating relationship and the second associating relationship to achieve scheduling of multiple cells through one DCI, and the terminal can accurately interpret the frequency domain scheduling information for each cell indicated by DCI.

For example, for the first to n-th scheduled cells, taking the combine indication method in the ZP CSI-RS trigger field as an example, the network device can determine the first associating relationship between the value of the ZP CSI-RS trigger field and n pieces of scheduling information (such as *I*_{*k*₁} to *I_{kₙ},* where *kⱼ* is the cell ID). In this embodiment, the network device can determine the first piece of scheduling information as the ZP CSI-RS trigger information for the first scheduled cell (cell *k*₁), the second piece of scheduling information as the ZP CSI-RS trigger information for the second scheduled cell (cell *k*₂), ..., the j-th piece of scheduling information as the ZP CSI-RS trigger information for the j-th scheduled cell (cell *kⱼ*), ..., and the n-th piece of scheduling information as the ZP CSI-RS trigger information for the n-th scheduled cell (cell *kₙ*) based on the second associating relationship. Then, DCI can be generated based on the first associating relationship and the second associating relationship to achieve scheduling of multiple cells through one DCI, and the terminal can accurately interpret the ZP CSI-RS trigger information for each cell indicated by DCI.

For example, for the first to n-th scheduled cells, taking the combine indication method in the BWP indicator field as an example, the network device can determine the first associating relationship between the value of indication the BWP indicator field and n pieces of scheduling information (such as *I*_{*k*₁} to *I_{kₙ},* where *kⱼ* is the cell ID). In this embodiment, the network device can determine the first piece of scheduling information as the BWP information for the first scheduled cell (cell *k*₁), the second piece of scheduling information as the BWP information for the second scheduled cell (cell *k*₂), ..., the j-th piece of scheduling information as the BWP information for the j-th scheduled cell (cell *kⱼ*), ..., and the n-th piece of scheduling information as the BWP information for the n-th scheduled cell (cell *kₙ*) based on the second associating relationship. Then, DCI can be generated based on the first associating relationship and the second associating relationship to achieve scheduling of multiple cells through one DCI, and the terminal can accurately interpret the BWP information for each cell indicated by DCI.

Where how to determine the order of multiple scheduled cells will be explained in the subsequent embodiments.

The following embodiments illustrate how the order of multiple scheduled cells is determined, where the predefined rule stipulates the associating relationship between the information field and the cell where the terminal receives the DCI and other cells according to the same rule.

In an embodiment, the predefined rule stipulates that the identity of the j-th scheduled cell is less than the identity of the (j+1)-th scheduled cell, such as *kⱼ* less than *k*_{*j+*1}; alternatively, the predefined rule stipulates that the identity of the j-th scheduled cell is greater than the identity of the (j+1)-th scheduled cell, such as *kⱼ* greater than *k*_{*j+*1}*.*

In an embodiment, regarding the identity (such as Cell ID) of the scheduled cell, the network device can indicate the identity of the scheduled cell to the terminal, e.g., through RRC signaling, e.g., through information elements such as ServcellIndex and/or SCellIndex in RRC signaling. If the identity of the cell corresponds to PCI, the identity of the scheduled cell can be indicated by the information element PhysCellId in RRC signaling. Of course, the terminal can also determine based on other signaling. Alternatively, the identity of the scheduled cell can be determined in other ways, such as by a predefined rule.

The predefined rule can stipulate that the scheduled cells are ordered according to identities of the scheduled cells, for example, the scheduled cells can be ordered from small to large according to their identities. If the identity of the j-th scheduled cell is less than the identity of the (j+1)-th scheduled cell. Alternatively, the scheduled cells can be ordered from large to small according to their identities, and then the identity of the j-th scheduled cell is greater than the identity of the (j+1)-th scheduled cell.

For example, taking four scheduled cells as an example, namely cell #1 with identity 1, cell #2 with identity 2, cell #3 with identity 3, and cell #4 with identity 4. If ordered from small to large according to the identities, *kⱼ* is less than *k*_{*j+*1}*,* and therefore it can be determined that the first cell is cell #1, the second scheduled cell is cell #2, the third cell is cell #3, and the fourth cell is cell #4. If ordered in from large to small according to the identities, *kⱼ* is greater than *k*_{*j+*1}*,* and therefore it can be determined that the first cell is cell #4, the second scheduled cell is cell #3, the third cell is cell #2, and the fourth cell is cell #1.

Based on this, the ordering of the cells can be accurately determined according to their identities, and it can be determined that the j-th scheduling information is for the j-th scheduled cell.

In an embodiment, the predefined rule stipulates that the center frequency of the j-th scheduled cell is less than the center frequency of the (j+1)-th scheduled cell; alternatively, the predefined rule stipulates that the center frequency of the j-th scheduled cell is greater than the center frequency of the (j+1)-th scheduled cell.

Regarding the center frequency of the scheduled cell, the network device can transmit information to indicate the center frequency of the scheduled cell to the terminal, such as transmitting a Synchronization Signal Block (SSB) for indication. Of course, the terminal can also determine in other ways, such as by the predefined rule.

The predefined rule can stipulate that the scheduled cells are ordered according to their center frequencies. For example, the scheduled cells can be ordered from small to large according to their center frequencies, such that the center frequency of the j-th scheduled cell is less than the center frequency of the (j+1)-th scheduled cell. Alternatively, the scheduled cells can be ordered from large to small according to their center frequencies, such that the center frequency of the j-th scheduled cell is greater than the center frequency of the (j+1)-th scheduled cell.

For example, taking four scheduled cells as an example, the center frequency of cell #1 is f1, the center frequency of cell #2 is f2, the center frequency of cell #3 is f3, and the center frequency of cell #4 is f4, where f1 > f2 > f3 >f4. If the scheduled cells are ordered from small to large according to their center frequencies, the first scheduled cell is cell #4, the second scheduled cell is cell #3, the third scheduled cell is cell #2, and the fourth scheduled cell is cell #1. If the scheduled cells are ordered from large to small according to their center frequencies, the first scheduled cell is cell #1, the second scheduled cell is cell #2, the third scheduled cell is cell #3, and the fourth scheduled cell is cell #4.

Based on this, the ordering of the cells can be accurately determined according to the center frequencies of the cells, and it can be determined that the j-th scheduling information is for the j-th scheduled cell.

In an embodiment, the predefined rule stipulates that the absolute radio frequency channel number (ARFCN) corresponding to the center frequency of the j-th scheduled cell is less than the ARFCN corresponding to the center frequency of the (j+1)-th scheduled cell; alternatively, the predefined rule stipulates that the ARFCN corresponding to the center frequency of the j-th scheduled cell is greater than the ARFCN corresponding to the center frequency of the (j+1)-th scheduled cell.

Regarding the ARFCN of the scheduled cell, the ARFCN of the scheduled cell can be determined based on the center frequency of the scheduled cell or in other ways.

The predefined rule can stipulate that the scheduled cells are ordered according to their ARFCNs, for example, the scheduled cells can be ordered from small to large according to ARFCN, such that the ARFCN of the j-th scheduled cell is less than the ARFCN of the (j+1)-th scheduled cell, or the scheduled cells can be ordered from large to small according to ARFCN, such that the ARFCN of the j-th scheduled cell is greater than the ARFCN of the (j+1)-th scheduled cell.

For example, taking four scheduled cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4. If the scheduled cells are ordered from small to large according to ARFCNs, the first cell is cell #4, the second scheduled cell is cell #3, the third cell is cell #2, and the fourth cell is cell #1. If the scheduled cells are ordered from small to large according to ARFCNs, the first cell is cell #1, the second scheduled cell is cell #2, the third cell is cell #3, and the fourth cell is cell #4.

Based on this, the ordering of the cells can be accurately determined according to the ARFCNs of the cells, and it can be determined that the j-th scheduling information is for the j-th scheduled cell.

In an embodiment, the multiple pieces of scheduling information includes n pieces of scheduling information, and the multiple scheduled cells include the cell where the terminal receives the DCI and (n-1) other cells. The predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, where 2 ≤ i ≤ n.

The scheduled cells can include the cell where the terminal receives the DCI and other cells (except the cell where the terminal receives the DCI in the scheduled cells), or the scheduled cells can not include the cell where the terminal receives the DCI and only include other cells. In this embodiment, when the predefined rule stipulates the associating relationship between the scheduled cell and the scheduling information, it can be distinguished between the cell where the terminal receives the DCI and other cells. The associating relationship between a piece of scheduling information and the cell where the terminal receives the DCI, and the associating relationship between pieces of scheduling information and other cells can be stipulated according to different rules.

Taking n scheduled cells as an example, the network device can determine the first associating relationship between the value of the information field in DCI and n pieces of scheduling information, and indicate the first associating relationship to the terminal. The corresponding relationship between the n pieces of scheduling information and the n scheduled cells can be determined according to the second associating relationship. The second associating relationship can be that the first piece of scheduling information in the n pieces of scheduling information is associated with the cell where the terminal receives the DCI, and the i-th piece of scheduling information in the second to the n pieces of scheduling information is associated with the (i-1)-th other cell in the n-1 other cells. That is, for the n-1 other cells, the associating relationship between cells and pieces of scheduling information is defined according to the same rule, and the cell where the terminal receives the DCI is defined to be associated with the first piece of scheduling information.

Based on this, the network device can indicate n pieces of scheduling information associated with n scheduled cells through the value of the information field in DCI. The terminal can determine that the first piece of scheduling information is the scheduling information for the cell where the terminal receives the DCI. From the second piece of scheduling information to the n-th piece of scheduling information, the i-th piece of scheduling information is the scheduling information for the (i-1)-th other cell. Therefore, based on the network device scheduling multiple cells through one DCI, the terminal can accurately interpret the scheduling information for each cell indicated by the DCI.

For example, for the n scheduled cells from the first cell to the n-th scheduled cell, if the n scheduled cells include the cell where the terminal receives the DCI and n-1 other cells, taking the combine indication method in the FDRA field as an example, n pieces of scheduling information can be determined based on the value of the FDRA field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n*-1}, then the cell ID of the (i-1)-th scheduled cell can be *k*_{*i-*1}.

In this embodiment, the network device can determine the first piece of scheduling information as the frequency domain scheduling information for the cell where the terminal receives the DCI based on the second associating relationship. In the (n-1) pieces of scheduling information from the second piece of scheduling information to the n-th piece of scheduling information, the second piece of scheduling information is the frequency domain scheduling information for the first other cell, ..., the i-th piece of scheduling information is the frequency domain scheduling information for the (i-1)-th other cell, ..., and the n-th piece of scheduling information is the frequency domain scheduling information for the (n-1)-th other cell. Based on the first associating relationship and the second associating relationship, DCI can be generated to achieve scheduling of multiple cells through one DCI, and the terminal can accurately interpret frequency domain scheduling information for each cell indicated by DCI.

For example, for the n scheduled cells from the first scheduled cell to the n-th scheduled cell, taking the combine indication method in the ZP CSI-RS trigger field as an example, n pieces of scheduling information can be determined based on the value of the ZP CSI-RS trigger field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n-*1}, then the cell ID of the (i-1)-th scheduled cell can be *k*_{*i-*1}.

In this embodiment, the network device can determine the first piece of scheduling information as the ZP CSI-RS trigger information for the cell where the terminal receives the DCI based on the second associating relationship. In the (n-1) pieces of scheduling information from the second piece of scheduling information to the n-th piece of scheduling information, the second piece of scheduling information is the ZP CSI-RS trigger information for the first other cell (cell *k*₁), ..., the i-th piece of scheduling information is the ZP CSI-RS trigger information for the (i-1)-th other cell (cell *k*_{*i*-1})*,* ..., and the n-th piece of scheduling information is the ZP CSI-RS trigger information for the (n-1)-th other cell (cell *k*_{*n-*1})*.* Based on the first associating relationship and the second associating relationship, DCI can be generated to achieve scheduling of multiple cells through one DCI, and the terminal can accurately interpret ZP CSI-RS trigger information for each cell indicated by DCI.

For example, for the n scheduled cells from the first cell to the n-th scheduled cell, if the n scheduled cells include the cell where the terminal receives the DCI and n-1 other cells, taking the combine indication method in the BWP indicator field as an example, n pieces of scheduling information can be determined based on the value of the BWP indicator field and the first associating relationship. The second associating relationship stipulated by the predefined rule can be that the first scheduling information in the n pieces of scheduling information is associated with the cell where the terminal receives the DCI, and in the n-1 pieces of scheduling information from the second piece of scheduling information to the n-th piece of scheduling information, the i-th piece of scheduling information is associated with the (i-1)-th other cell. If the cell ID of the cell where the terminal receives the DCI is not between *k*₁ and *k*_{*n-*1}, then the cell ID of the (i-1)-th scheduled cell can be *k*_{*i*-1}.

In this embodiment, the network device can determine the first piece of scheduling information as the BWP information for the first cell based on the second associating relationship. In the (n-1) pieces of scheduling information from the second piece of scheduling information to the n-th piece of scheduling information, the second piece of scheduling information is the BWP information information for the first other cell (cell *k*₁)*,* ..., the i-th piece of scheduling information is the BWP information information for the (i-1)-th other cell (cell *k*_{*i*-1})*,* ..., and the n-th piece of scheduling information is the BWP information information for the (n-1)-th other cell (cell *k*_{*n-*1})*.* Based on the first associating relationship and the second associating relationship, DCI can be generated to achieve scheduling of multiple cells through one DCI, and the terminal can accurately interpret BWP information for each cell indicated by DCI.

How to determine the order of multiple scheduled cells will be explained in the subsequent embodiments.

The following embodiments illustrate how the order of multiple scheduled cells is determined, where the predefined rule stipulates the associating relationship between the information field and the cell where the terminal receives the DCI and other cells according to different rules.

In an embodiment, the predefined rule stipulates that the identity of the (i-1)-th scheduled cell is less than the identity of the i-th scheduled cell; alternatively, the predefined rule stipulates that the identity of the (i-1)-th scheduled cell is greater than the identity of the i-th scheduled cell.

In an embodiment, regarding the identity (such as Cell ID) of the scheduled cell, the network device can indicate the identity of the scheduled cell to the terminal, e.g., through RRC signaling, e.g., through information elements such as ServcellIndex and/or SCellIndex in RRC signaling. If the identity of the cell corresponds to PCI, the identity of the scheduled cell can be indicated by the information element PhysCellId in RRC signaling. Of course, the terminal can also determine based on other methods, such as by a predefined rule.

The predefined rule can stipulate that the scheduled cells are ordered according to their identities. For example, the scheduled cells can be ordered from small to large according to their identities. Then, the cell where the terminal receives the DCI is the first cell, and the identity of the (i-1)-th other cell is smaller than the identity of the i-th other cell. If the cell ID of the cell where the terminal receives the DCI is not between *k*₁ and *k*_{*n-*1}*, k*_{*i-*1} is less than *kᵢ*. Alternatively, if the scheduled cells are ordered from large to small according to their identities, the cell where the terminal receives the DCI is the first cell, and the identity of the (i-1)-th other cell is greater than the identity of the i-th other cell. If the cell ID of the cell where the terminal receives the DCI is not between *k*₁ and *k*_{*n-*1}*, k*_{*i-*1} is greater than *kᵢ*.

For example, taking four scheduled cells as examples, namely cell #1 with identity 1, cell #2 with identity 2, cell #3 with identity 3, and cell #4 with identity 4, where cell #3 is the cell where the terminal receives the DCI, If the scheduled cells are ordered from small to large according to the identities, the first scheduled cell is cell #3, and for other cells except cell #3, *k*_{*i-*1} is less than *kᵢ*, the second scheduled cell is cell #1, the third scheduled cell is cell #2, and the fourth scheduled cell is cell #4. If the scheduled cells are ordered from large to small according to the identities, the first scheduled cell is cell #3, and for other cells except cell #3, *k*_{*i-*1} is greater than *kᵢ*, the second scheduled cell is cell #4, the third scheduled cell is cell #2, and the fourth scheduled cell is cell #1.

Based on this, the ordering of the cells can be accurately determined according to their identities, and the first piece of scheduling information can be determined as the scheduling information for the cell where the terminal receives the DCI, and the i-th piece of scheduling information is specifically the scheduling information for the i-th other cell.

In an embodiment, the predefined rule stipulates that the center frequency of the (i-1)-th scheduled cell is less than the center frequency of the i-th scheduled cell; alternatively, the predefined rule stipulates that the center frequency of the (i-1)-th scheduled cell is less than the center frequency of the i-th scheduled cell.

Regarding the center frequency of the scheduled cell, the network device can transmit information to indicate the center frequency of the scheduled cell to the terminal, such as transmitting a SSB for indication. Of course, the terminal can also determine in other ways, such as by the predefined rule.

The predefined rule can stipulate that the scheduled cells are ordered according to their center frequencies. For example, the scheduled cells can be ordered from small to large according to their center frequencies. Therefore, the cell where the terminal receives the DCI is the first cell, and the center frequency of the (i-1)-th other cell is lower than the center frequency of the i-th other cell. Alternatively, if the scheduled cells are ordered from large to small according to their center frequencies, the cell where the terminal is located is the first cell, and the center frequency of the (i-1)-th other cell is greater than the center frequency of the i-th other cell.

For example, taking four scheduled cells as an example, the center frequency of cell #1 is f1, the center frequency of cell #2 is f2, the center frequency of cell #3 is f3, and the center frequency of cell #4 is f4, where f1 > f2 > f3 > f4, and cell #3 is the cell where the terminal receives the DCI. If the scheduled cells are ordered from small to large according to their center frequencies, the first scheduled cell is cell #3, the second scheduled cell is cell #4, the third scheduled cell is cell #2, and the fourth scheduled cell is cell #1. If the scheduled cells are ordered from large to small according to their center frequencies, the first scheduled cell is cell #3, the second scheduled cell is cell #1, the third scheduled cell is cell #2, and the fourth scheduled cell is cell #4.

Based on this, the ordering of the cells can be accurately determined according to their center frequencies, and the first piece of scheduling information can be determined as the scheduling information for the cell where the terminal receives the DCI, and the i-th piece of scheduling information is specifically the scheduling information for the i-th other cell.

In an embodiment, the predefined rule stipulates that the absolute radio frequency channel number ARFCN corresponding to the center frequency of the (i-1)-th scheduled cell is less than the ARFCN corresponding to the center frequency of the i-th scheduled cell; and alternatively, the predefined rule stipulates that the ARFCN corresponding to the center frequency of the (i-1)-th scheduled cell is greater than the ARFCN corresponding to the center frequency of the i-th scheduled cell.

Regarding the ARFCN of the scheduled cell, the ARFCN of the scheduled cell can be determined based on the center frequency of the scheduled cell or in other ways.

The predefined rule can stipulate that the scheduled cells are ordered according to their ARFCNs. For example, the scheduled cells can be ordered from small to large according to their ARFCNs. Therefore, the cell where the terminal receives the DCI is the first cell, and the ARFCN of the (i-1)-th other cell is lower than the ARFCN of the i-th other cell. Alternatively, if the scheduled cells are ordered from large to small according to their ARFCNs, the cell where the terminal is located is the first cell, and the ARFCN of the (i-1)-th other cell is greater than the ARFCN of the i-th other cell.

For example, taking four scheduled cells as an example, the ARFCN of cell #1 is ARFCN #1, the ARFCN of cell #2 is ARFCN #2, the ARFCN of cell #3 is ARFCN #3, and the ARFCN of cell #4 is ARFCN #4, where ARFCN #1 > ARFCN #2 > ARFCN #3 > ARFCN #4, and cell #3 is the cell where the terminal receives the DCI. If the scheduled cells are ordered from small to large according to their ARFCNs, the first scheduled cell is cell #3, the second scheduled cell is cell #4, the third scheduled cell is cell #2, and the fourth scheduled cell is cell #1. If the scheduled cells are ordered from large to small according to their ARFCNs, the first scheduled cell is cell #3, the second scheduled cell is cell #1, the third scheduled cell is cell #2, and the fourth scheduled cell is cell #4.

Based on this, the ordering of the cells can be accurately determined according to their ARFCNs, and the first piece of scheduling information can be determined as the scheduling information for the cell where the terminal receives the DCI, and the i-th piece of scheduling information is specifically the scheduling information for the i-th other cell.

Corresponding to the embodiments of the scheduling information determining method and the downlink control information transmitting method described above, the present disclosure further provides embodiments of a scheduling information determining apparatus and a downlink control information transmitting apparatus.

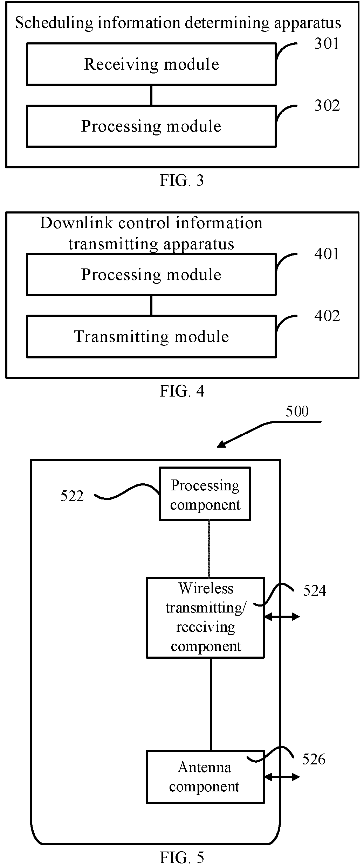

FIG. 3 is a schematic block diagram of a scheduling information determining apparatus according to an embodiment in the present disclosure. The scheduling information determining apparatus shown in the embodiments can be applied to a terminal. The terminal includes but is not limited to a communication device such as a mobile phone, a tablet, a wearable device, a sensor, or an Internet of Things (IoT) device. The terminal can communicate with a network device. The network device includes but is not limited to a network device (such as a base station, a core network, etc.) in a communication system such as a 4G communication system, a 5G communication system, or a 6G communication system, etc.

As shown in FIG. 3, the scheduling information determining apparatus may include:
a receiving module 301, configured to receive downlink control information (DCI) for scheduling a plurality of cells transmitted by a network device; and
a processing module 302, configured to determine a first associating relationship between a value of a specific information field in the DCI and a plurality of pieces of scheduling information, and a second associating relationship between the plurality of pieces of scheduling information and a plurality of scheduled cells; and determine scheduling information for each of the plurality of scheduled cells based on the first associating relationship and the second associating relationship.

In an embodiment, the processing module is configured to determine the second associating relationship based on the predefined rule.

In an embodiment, the multiple pieces of scheduling information include n pieces of scheduling information, and the multiple scheduled cells include n scheduled cells. The predefined rule stipulates that a j-th piece of scheduling information in the n pieces of scheduling information is associated with a j-th scheduled cell in the n scheduled cells, where 1 ≤ j ≤ n.

In an embodiment, the predefined rule stipulates that the identity of the j-th scheduled cell is less than the identity of the (j+1)-th scheduled cell; alternatively, the predefined rule stipulates that the identity of the j-th scheduled cell is greater than the identity of the (j+1)-th scheduled cell.

In an embodiment, the predefined rule stipulates that the center frequency of the j-th scheduled cell is less than the center frequency of the (j+1)-th scheduled cell; alternatively, the predefined rule stipulates that the center frequency of the j-th scheduled cell is greater than the center frequency of the (j+1)-th scheduled cell.

In an embodiment, the predefined rule stipulates that the absolute radio frequency channel number (ARFCN) corresponding to the center frequency of the j-th scheduled cell is less than the ARFCN corresponding to the center frequency of the (j+1)-th scheduled cell; alternatively, the predefined rule stipulates that the ARFCN corresponding to the center frequency of the j-th scheduled cell is greater than the ARFCN corresponding to the center frequency of the (j+1)-th scheduled cell.

In an embodiment, the multiple pieces of scheduling information includes n pieces of scheduling information, and the multiple scheduled cells include the cell where the terminal receives the DCI and (n-1) other cells. The predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, where 2 ≤ i ≤ n.

In an embodiment, the predefined rule stipulates that the identity of the (i-1)-th scheduled cell is less than the identity of the i-th scheduled cell; alternatively, the predefined rule stipulates that the identity of the (i-1)-th scheduled cell is greater than the identity of the i-th scheduled cell.

In an embodiment, the predefined rule stipulates that the center frequency of the (i-1)-th scheduled cell is less than the center frequency of the i-th scheduled cell; alternatively, the predefined rule stipulates that the center frequency of the (i-1)-th scheduled cell is less than the center frequency of the i-th scheduled cell.

In an embodiment, the predefined rule stipulates that the absolute radio frequency channel number ARFCN corresponding to the center frequency of the (i-1)-th scheduled cell is less than the ARFCN corresponding to the center frequency of the i-th scheduled cell; and alternatively, the predefined rule stipulates that the ARFCN corresponding to the center frequency of the (i-1)-th scheduled cell is greater than the ARFCN corresponding to the center frequency of the i-th scheduled cell.

In an embodiment, the processing module is configured to determine the first associating relationship based on the indication from the network device.

FIG. 4 is a schematic block diagram of a downlink control information transmitting apparatus according to an embodiment in the present disclosure. The downlink control information transmitting apparatus shown in the embodiments can be performed by a network device, where the network device can communicate with a terminal. The network device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device.

As shown in FIG. 4, the downlink control information transmitting apparatus may include:
a processing module 401, configured to determine a first associating relationship between a value of a specific information field in DCI and a plurality of pieces of scheduling information each with a type same as a type of the specific information field, and a second associating relationship between the plurality of pieces of scheduling information and a plurality of scheduled cells; and generate DCI based on the first associating relationship and the second associating relationship; and
a transmitting module 402, configured to transmit the generated DCI to the terminal.

In an embodiment, the processing module is configured to determine the second associating relationship based on the predefined rule.

In an embodiment, the multiple pieces of scheduling information include n pieces of scheduling information, and the multiple scheduled cells include n scheduled cells. The predefined rule stipulates that a j-th piece of scheduling information in the n pieces of scheduling information is associated with a j-th scheduled cell in the n scheduled cells, where 1 ≤j ≤ n.

In an embodiment, the predefined rule stipulates that the identity of the j-th scheduled cell is less than the identity of the (j+1)-th scheduled cell; alternatively, the predefined rule stipulates that the identity of the j-th scheduled cell is greater than the identity of the (j+1)-th scheduled cell.

In an embodiment, the predefined rule stipulates that the center frequency of the j-th scheduled cell is less than the center frequency of the (j+1)-th scheduled cell; alternatively, the predefined rule stipulates that the center frequency of the j-th scheduled cell is greater than the center frequency of the (j+1)-th scheduled cell.

In an embodiment, the predefined rule stipulates that the absolute radio frequency channel number (ARFCN) corresponding to the center frequency of the j-th scheduled cell is less than the ARFCN corresponding to the center frequency of the (j+1)-th scheduled cell; alternatively, the predefined rule stipulates that the ARFCN corresponding to the center frequency of the j-th scheduled cell is greater than the ARFCN corresponding to the center frequency of the (j+1)-th scheduled cell.

In an embodiment, the multiple pieces of scheduling information includes n pieces of scheduling information, and the multiple scheduled cells include the cell where the terminal receives the DCI and (n-1) other cells. The predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, where 2 ≤ i ≤ n.

In an embodiment, the predefined rule stipulates that the identity of the (i-1)-th scheduled cell is less than the identity of the i-th scheduled cell; alternatively, the predefined rule stipulates that the identity of the (i-1)-th scheduled cell is greater than the identity of the i-th scheduled cell.

In an embodiment, the predefined rule stipulates that the center frequency of the (i-1)-th scheduled cell is less than the center frequency of the i-th scheduled cell; alternatively, the predefined rule stipulates that the center frequency of the (i-1)-th scheduled cell is less than the center frequency of the i-th scheduled cell.

In an embodiment, the predefined rule stipulates that the absolute radio frequency channel number ARFCN corresponding to the center frequency of the (i-1)-th scheduled cell is less than the ARFCN corresponding to the center frequency of the i-th scheduled cell; and alternatively, the predefined rule stipulates that the ARFCN corresponding to the center frequency of the (i-1)-th scheduled cell is greater than the ARFCN corresponding to the center frequency of the i-th scheduled cell.

In an embodiment, the processing module is configured to determine the first associating relationship and/or the second associating relationship based on the implementation of the network device; where the transmitting module is further configured to indicate the first associating relationship to the terminal.

With regard to the device in the above examples, the specific manner in which the respective modules perform the operations has been described in detail in the examples of the related methods, and will not be explained in detail herein.

Since the device embodiments basically correspond to the method embodiments, the relevant parts can refer to the partial description of the method embodiments. The device examples described above are merely illustrative, where the modules described as separate members may be or not be physically separated, and the members displayed as modules may be or not be physical units, i.e., may be located in one place, or may be distributed in a plurality of network modules. Part or all of the modules may be selected according to actual requirements to implement the objectives of the solutions in the examples. A person skilled in the art can understand and implement without creative work.

The embodiments of the present disclosure further provide a communication device, including: one or more processors; and one or more memories for storing a computer program; where when the computer program is executed by the one or more processors, the scheduling information determining method according to any one of embodiments mentioned above is implemented.

The embodiments of the present disclosure further provide a communication device, including: one or more processors; and one or more memories for storing a computer program; where when the computer program is executed by the one or more processors, the downlink control information transmitting method according to any one of the above embodiments is implemented.

The embodiments of the present disclosure further provide a computer-readable storage medium for storing a computer program is provided, where when the computer program is executed by one or more processors, the scheduling information determining method according to any one of embodiments mentioned above is implemented.

The embodiments of the present disclosure further provide a computer-readable storage medium for storing a computer program, where when the computer program is executed by one or more processors, the downlink control information transmitting method according to any one of the above embodiments is implemented.

As shown in FIG. 5, FIG. 5 is a schematic block diagram of a device 500 for transmitting downlink control information according to embodiments of the present disclosure. The device 500 may be provided as a base station. Referring to FIG. 5, the device 500 includes a processing component 522, a wireless transmitting/receiving component 524, an antenna component 526, and a signaling processing portion specific to a wireless interface. The processing component 522 may further include one or more processors. One of the processors in processing component 522 can be configured to implement the downlink control information transmitting method described in any one of the above embodiments.

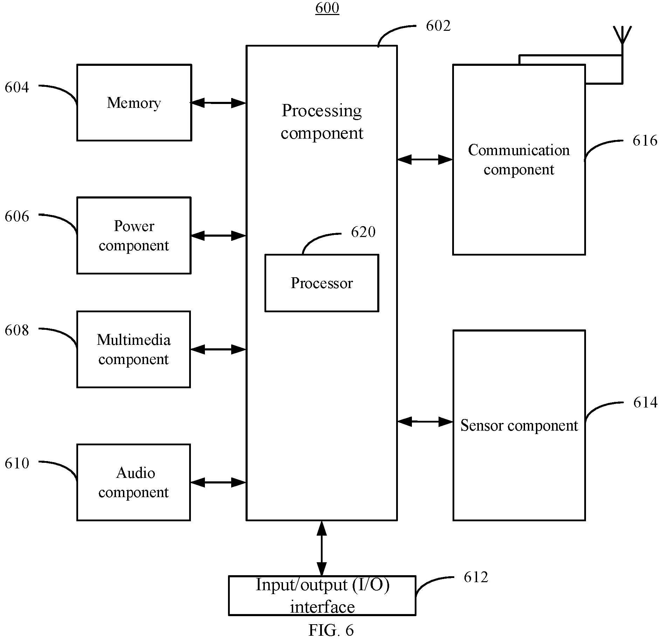

FIG. 6 is a schematic block diagram of a device 600 for determining scheduling information according to an embodiment in the present disclosure. For example, device 600 can be a mobile phone, a computer, a digital broadcast terminal, a message transmitting and receiving device, a gaming console, a tablet device, a medical device, a fitness device, a personal digital assistant, and the like.

Referring to FIG. 6, device 600 can include one or more of the following components: processing component 602, memory 604, power component 606, multimedia component 608, audio component 610, input/output (I/O) interface 612, sensor component 614, or a communication component 616.

The processing component 602 generally controls the overall operations of the electronic device 600, such as operations associated with display, calling, data communication, camera operation and recording operation. The processing assembly 602 may include one or more processors 620 to execute instructions to complete all or a part of the steps of the above scheduling information determining methods. Further, the processing component 602 may include one or more modules to facilitate interaction between the processing component 602 and another component. For example, the processing component 602 may include a multimedia module to facilitate the interaction between the multimedia component 608 and the processing component 602.

The memory 604 is configured to store different types of data to support the operations of the electronic device 600. Examples of such data include instructions of any application program or method operable on the electronic device 600, contact data, telephone directory data, messages, pictures, videos, and the like. The memory 604 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 606 provides power for different components of the electronic device 600. The power supply component 606 may include a power management system, one or more power sources, and other components associated with generating, managing and distributing power for the electronic device 600.

The multimedia component 608 may include a screen for providing an output interface between the electronic device 600 and a user. In some examples, the screen may include a Liquid Crystal Display (LCD) and a Touch Panel (TP). If the screen includes a touch panel, the screen may be implemented as a touch screen for receiving an input signaling from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 608 may include a front camera and/or a rear camera. When the device 600 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 610 is configured to output and/or input an audio signaling. For example, the audio component 610 may include a microphone (MIC). When the electronic device 600 is in an operating mode, such as a call mode, a recording mode and a speech recognition mode, the microphone is configured to receive an external audio signal. The received audio signaling may be further stored in the memory 604 or transmitted via the communication component 616. In some examples, the audio component 610 also includes a loudspeaker for outputting audio signaling.

The I/O interface 612 provides an interface between the processing component 602 and a peripheral interface module which may be a keyboard, a click wheel, a button, or the like. These buttons may include but are not limited to, a home button, a volume button, a start button and a lock button.

The sensor component 614 may include one or more sensors for providing state assessments in different aspects for the electronic device 600. For example, sensor component 614 can detect an open/closed state of device 600, a relative positioning of components, such as the display and keypad of device 600, and sensor component 614 can also detect a change in position of device 600 or a component of device 600, the presence or absence of user contact with device 600, orientation or acceleration/deceleration of device 600, and temperature change of device 600. The sensor component 614 may include a proximity sensor for detecting the existence of a nearby object without any physical touch. The sensor component 614 may also include an optical sensor, such as a CMOS or CCD image sensor used in an imaging application. In some examples, the sensor component 614 may also include an acceleration sensor, a gyro sensor, a magnetic sensor, a pressure sensor, or a temperature sensor.

The communication component 616 is configured to facilitate wired or wireless communication between the electronic device 600 and other devices. The device 600 may access a wireless network according to a communication standard, such as WiFi, 2G, 3G, 4G LTE, 5G NR, or a combination thereof. In some embodiments, the communication component 616 may receive a broadcast signaling or broadcast-related information from an external broadcast management system via a broadcast channel. In an example, the communication component 616 may also include a Near Field Communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an example, the apparatus 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the scheduling information determining method described above.

In an example, a non-transitory computer readable storage medium including instructions, such as the memory 604 including instructions, is also provided. The above instructions may be executed by the processor 620 of the apparatus 600 to complete the above scheduling information determining method. For example, the non-transitory computer-readable storage medium may be a ROM, a RAM, a CD-ROM, a magnetic tape, a floppy disc, an optical data storage device, and the like.

After considering and practicing the disclosure of the specification, other embodiments of the present disclosure will be readily apparent to those skilled in the art. The present disclosure is intended to cover any modification, use or adaptation of the present disclosure. These modifications, uses or adaptations follow the general principles of the present disclosure and include common knowledge and conventional technical means in the technical field that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

It is to be noted that the relational terms such as "first" and "second" used herein are merely intended to distinguish one entity or operation from another entity or operation rather than to require or imply any such actual relation or order existing between these entities or operations. The term "including", "containing" or any variation thereof is intended to encompass non-exclusive inclusion, so that a process, method, article or device including a series of elements includes not only those elements but also other elements not listed explicitly or those elements inherent to such a process, method, article or device. Without further limitation, the element defined by the statement "including a ......" do not preclude the existence of additional identical elements in the process, method, article, or device that include the element.

The above provides a detailed introduction to the methods and apparatuses provided in the embodiments of the present disclosure. Specific examples are applied in the present disclosure to explain the principles and embodiments of the present disclosure. The explanations of the above embodiments are only used to help understand the methods and core ideas of the present disclosure. Meanwhile, for those skilled in the art, based on the idea of the present disclosure, there will be changes in the embodiments and application scopes. In summary, the content of the specification should not be construed as limiting the present disclosure.

## Claims

1. A scheduling information determining method, performed by a terminal, comprising:
receiving downlink control information (DCI) for scheduling a plurality of cells transmitted by a network device;
determining a first associating relationship between a value of a specific information field in the DCI and a plurality of pieces of scheduling information, and a second associating relationship between the plurality of pieces of scheduling information and a plurality of scheduled cells; and
determining scheduling information for each of the plurality of scheduled cells based on the first associating relationship and the second associating relationship.

2. The method according to claim 1, wherein determining the second associating relationship between the plurality of pieces of scheduling information and the plurality of scheduled cells comprises:
determining the second associating relationship according to a predefined rule.

3. The method according to claim 2, wherein the plurality of pieces of scheduling information comprise n pieces of scheduling information, and the plurality of scheduled cells comprise n scheduled cells; and
the predefined rule stipulates that a j-th piece of scheduling information in the n pieces of scheduling information is associated with a j-th scheduled cell in the n scheduled cells, wherein 1 ≤ j ≤ n.

4. The method according to claim 3, wherein the predefined rule stipulates that an identity of the j-th scheduled cell is less than an identity of a (j+1)-th scheduled cell; or
the predefined rule stipulates that an identity of the j-th scheduled cell is greater than an identity of a (j+1)-th scheduled cell.

5. The method according to claim 3, wherein the predefined rule stipulates that a center frequency of the j-th scheduled cell is less than a center frequency of a (j+1)-th scheduled cell; or
the predefined rule stipulates that a center frequency of the j-th scheduled cell is greater than a center frequency of a (j+1)-th scheduled cell.

6. The method according to claim 3, wherein the predefined rule stipulates that an absolute radio frequency channel number (ARFCN) corresponding to a center frequency of the j-th scheduled cell is less than an ARFCN corresponding to a center frequency of a (j+1)-th scheduled cell; or
the predefined rule stipulates that an ARFCN corresponding to a center frequency of the j-th scheduled cell is greater than an ARFCN corresponding to a center frequency of a (j+1)-th scheduled cell.

7. The method according to claim 2, wherein the plurality of pieces of scheduling information comprises n pieces of scheduling information, and the plurality of scheduled cells comprise a cell where the terminal receives the DCI and n-1 other cells; and
the predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, wherein 2 ≤ i ≤ n.

8. The method according to claim 7, wherein the predefined rule stipulates that an identity of an (i-1)-th scheduled cell is smaller than an identity of an i-th scheduled cell; or
the predefined rule stipulates that an identity of an (i-1)-th scheduled cell is greater than an identity of an i-th scheduled cell.

9. The method according to claim 7, wherein the predefined rule stipulates that a center frequency of an (i-1)-th scheduled cell is less than a center frequency of an i-th scheduled cell; or
the predefined rule stipulates that a center frequency of an (i-1)-th scheduled cell is greater than a center frequency of an i-th scheduled cell.

10. The method according to claim 7, wherein the predefined rule stipulates that an absolute radio frequency channel number (ARFCN) corresponding to a center frequency of an (i-1)-th scheduled cell is less than an ARFCN corresponding to a center frequency of an i-th scheduled cell; or
the predefined rule stipulates that an ARFCN corresponding to a center frequency of an (i-1)-th scheduled cell is greater than an ARFCN corresponding to a center frequency of an i-th scheduled cell.

11. The method according to claim 1, wherein determining the first associating relationship between the value of the specific information field in the DCI and the plurality of pieces of scheduling information comprises:
determining the first associating relationship based on an indication from the network device.

12. A downlink control information transmitting method, performed by a network device, comprising:
determining a first associating relationship between a value of a specific information field in DCI and a plurality of pieces of scheduling information each with a type same as a type of the specific information field, and a second associating relationship between the plurality of pieces of scheduling information and a plurality of scheduled cells;
generating DCI based on the first associating relationship and the second associating relationship; and
transmitting generated DCI to a terminal.

13. The method according to claim 12, wherein determining the second associating relationship between the plurality of pieces of scheduling information and the plurality of scheduled cells comprises:
determining the second associating relationship according to a predefined rule.

14. The method according to claim 13, wherein the plurality of pieces of scheduling information comprise n pieces of scheduling information, and the plurality of scheduled cells comprise n scheduled cells; and
the predefined rule stipulates that a j-th piece of scheduling information in the n pieces of scheduling information is associated with a j-th scheduled cell in the n scheduled cells, wherein 1 ≤ j ≤ n.

15. The method according to claim 14, wherein the predefined rule stipulates that an identity of the j-th scheduled cell is less than an identity of a (j+1)-th scheduled cell; or
the predefined rule stipulates that an identity of the j-th scheduled cell is greater than an identity of a (j+1)-th scheduled cell.

16. The method according to claim 14, wherein the predefined rule stipulates that a center frequency of the j-th scheduled cell is less than a center frequency of a (j+1)-th scheduled cell; or
the predefined rule stipulates that a center frequency of the j-th scheduled cell is greater than a center frequency of a (j+1)-th scheduled cell.

17. The method according to claim 14, wherein the predefined rule stipulates that an absolute radio frequency channel number (ARFCN) corresponding to a center frequency of the j-th scheduled cell is less than an ARFCN corresponding to a center frequency of a (j+1)-th scheduled cell; or
the predefined rule stipulates that an ARFCN corresponding to a center frequency of the j-th scheduled cell is greater than an ARFCN corresponding to a center frequency of a (j+1)-th scheduled cell.

18. The method according to claim 13, wherein the plurality of pieces of scheduling information comprises n pieces of scheduling information, and the plurality of scheduled cells comprise a cell where the terminal receives the DCI and n-1 other cells; and
the predefined rule stipulates that a first piece of scheduling information in the n pieces of scheduling information is associated with the cell where the terminal receives the DCI, and information indicated by an i-th piece of scheduling information in second to n-th pieces of scheduling information is associated with an (i-1)-th other cell in the n-1 other cells, wherein 2 ≤ i ≤ n.

19. The method according to claim 18, wherein the predefined rule stipulates that an identity of an (i-1)-th scheduled cell is smaller than an identity of an i-th scheduled cell; or
the predefined rule stipulates that an identity of an (i-1)-th scheduled cell is greater than an identity of an i-th scheduled cell.

20. The method according to claim 18, wherein the predefined rule stipulates that a center frequency of an (i-1)-th scheduled cell is less than a center frequency of an i-th scheduled cell; or
the predefined rule stipulates that a center frequency of an (i-1)-th scheduled cell is greater than a center frequency of an i-th scheduled cell.

21. The method according to claim 18, wherein the predefined rule stipulates that an absolute radio frequency channel number (ARFCN) corresponding to a center frequency of an (i-1)-th scheduled cell is less than an ARFCN corresponding to a center frequency of an i-th scheduled cell; or
the predefined rule stipulates that an ARFCN corresponding to a center frequency of an (i-1)-th scheduled cell is greater than an ARFCN corresponding to a center frequency of an i-th scheduled cell.

22. The method according to claim 12, wherein determining the first associating relationship between the value of the specific information field in the DCI and the plurality of pieces of scheduling information each with a type same as a type of the specific information field comprises:
determining the first associating relationship based on implementation of the network device;
wherein the method further comprises:
indicating the first associating relationship to the terminal.

23. A scheduling information determining apparatus, applied to a terminal, comprising:
a receiving module, configured to receive downlink control information (DCI) for scheduling a plurality of cells transmitted by a network device; and
a processing module, configured to determine a first associating relationship between a value of a specific information field in the DCI and a plurality of pieces of scheduling information, and a second associating relationship between the plurality of pieces of scheduling information and a plurality of scheduled cells; and determine scheduling information for each of the plurality of scheduled cells based on the first associating relationship and the second associating relationship.

24. A downlink control information transmitting apparatus, applied to a network device, comprising:
a processing module, configured to determine a first associating relationship between a value of a specific information field in DCI and a plurality of pieces of scheduling information each with a type same as a type of the specific information field, and a second associating relationship between the plurality of pieces of scheduling information and a plurality of scheduled cells; and generate DCI based on the first associating relationship and the second associating relationship; and
a transmitting module, configured to transmit generated DCI to a terminal.

25. A communication device, comprising:
one or more processors; and
one or more memories for storing a computer program;
wherein when the computer program is executed by the one or more processors, the scheduling information determining method according to any one of claims 1 to 11 is implemented.

26. A communication device, comprising:
one or more processors; and
one or more memories for storing a computer program;
wherein when the computer program is executed by the one or more processors, the downlink control information transmitting method according to any one of claims 12 to 22 is implemented.

27. A computer-readable storage medium for storing a computer program, wherein when the computer program is executed by one or more processors, the scheduling information determining method according to any one of claims 1 to 11 is implemented.

28. A computer-readable storage medium for storing a computer program, wherein when the computer program is executed by one or more processors, the downlink control information transmitting method according to any one of claims 12 to 22 is implemented.
